# FASCICULE DE BREVET EUROPEEN

(11) **EP 2 346 605 B1**
(45) Date de publication et mention de la délivrance du brevet: **17.05.2017**
(21) Numéro de dépôt: 09768145.6
(22) Date de dépôt: 04.11.2009
(51) Int. Cl.: B01L 3/00, B01L 3/02, B01L 9/00, G01N 35/00

(54) **DISPOSITIF DE PREPARATION ET/OU DE TRAITEMENT D'UN ECHANTILLON BIOLOGIQUE**
VORRICHTUNG ZUR VORBEREITUNG UND/ODER BEHANDLUNG EINER BIOLOGISCHEN PROBE
DEVICE FOR PREPARING AND/OR TREATING A BIOLOGICAL SAMPLE

(30) Priorité: 05.11.2008 FR 0806169
(43) Date de publication de la demande: 27.07.2011
(73) Titulaire: Biomérieux, 69280 Marcy L'etoile (FR)
(72) Inventeur: BEUMER, Tom, 5346WR Oss (NL); FOUCAULT, Frédéric, 69290 Craponne (FR); MAIONE, Emiliano, 50012 Bagno a Ripoli (Firenze) (IT); RUBENS, Agnès, 01090 Montceaux (FR)
(74) Mandataire: Sprugnoli, Claude Louis Victor
(86) Numéro de dépôt international: PCT/FR2009/052133
(87) Numéro de publication internationale: WO 2010/052429

(56) Documents cités:
- GB-A- 2 165 216
- US-A1- 2001 012 612
- US-A1- 2006 275 861
- US-A1- 2006 292 036
- US-B1- 6 534 008

## Description

La présente invention concerne un dispositif de préparation et/ou de traitement d'un échantillon biologique.

Un tel dispositif est destiné notamment à être utilisé dans le cadre de l'automatisation de protocoles biologiques, notamment de protocoles biologiques complexes.

A titre d'exemple non limitatif, un tel dispositif peut être appliqué à la détection de pathogènes ou des molécules, acides nucléiques ou protéines, d'un pathogène.

Un tel protocole biologique doit être réalisé de préférence dans un dispositif consommable à faible coût, lié au module de détection, et qui est changé entre chaque test. Ce consommable peut être inséré dans un appareil de traitement contenant les composants coûteux, par exemple des composants mécaniques ou optiques.

Différentes techniques sont utilisées pour automatiser des protocoles biologiques complexes, tels que protocoles d'immunoessais, à partir d'un échantillon de quelques millilitres. Dans tous les cas, la présence de plusieurs réactifs nécessite l'existence de différentes chambres de stockage et d'au moins une chambre de réaction. Des moyens permettant le déplacement des fluides sont également nécessaires.

Un premier dispositif connu, utilisé notamment par la société Genpoint et mettant en oeuvre un robot de préparation commercialisé par la société Tecan, comprend des moyens de déplacement en trois dimensions d'une pipette et une plaque présentant une pluralité de puits, les puits contenant soit un réactif, soit un échantillon.

La pipette est déplacée au dessus de la plaque de façon à être positionnée dans un puits afin de prélever une quantité de réactif, puis positionnée dans le puits contenant l'échantillon afin de délivrer la quantité de réactif dans ce puits, ceci de façon successive pour chaque réactif.

Des moyens additionnels nécessaires au déroulement des réactions, en particulier des moyens de chauffage ou de capture magnétique peuvent être disposés sous la plaque.

Un tel dispositif présente l'inconvénient d'utiliser des moyens mécaniques de précision pour le déplacement de la pipette qui présentent une structure complexe et sont difficilement transportables.

Pour éviter les contaminations entre tests il a donc été envisagé de réaliser des tests unitaires dans des dispositifs hermétiques, à usage unique.

Ainsi les documents US6878540, US6440725 et US6881541 décrivent des dispositifs comportant une cartouche à usage unique comprenant un ensemble de chambres ou réservoirs destinés à recevoir notamment un échantillon, des fluides de lavage, d'élution, des réactifs, les chambres ou réservoirs étant reliés par un ensemble de canaux. Ces dispositifs comprennent également une puce microfluidique. Le mouvement des fluides entre les différentes chambres et réservoirs est assuré par l'intermédiaire de l'ensemble de canaux sous l'effet de pompes et de moyens de contrôle de flux de type soupapes ou diodes fluidiques. Une des utilisations de ces dispositifs est la réalisation du traitement d'un échantillon fluidique pour extraire et amplifier des acides nucléiques, notamment par PCR.

Le document US6734684 décrit pour sa part également une cartouche à usage unique comprenant un ensemble de chambres et de réservoirs. Dans ce cas de ce document, une chambre de traitement unique est utilisée qui peut être mise en communication fluidique avec d'autres chambres ou réservoir de façon sélective par l'intermédiaire de canaux ménagés dans un organe rotatif.

Ces solutions permettent effectivement de diminuer les contaminations, mais impliquent la mise en place d'une structure de communication fluidique entre les chambres et de déplacement qui reste complexe.

Le document US6964862 décrit un dispositif comprenant un élément à usage unique présentant des chambres séparées par des parois permettant une communication fluidique au dessus d'une pression déterminée. Chaque chambre est remplie avec un fluide spécifique avant fermeture. La mise en communication des fluides contenus dans deux chambres voisines est réalisée par pression mécanique sur l'une des deux chambres, qui provoque l'apparition d'une ouverture dans la paroi de séparation.

Ce dernier dispositif permet de simplifier la réalisation de la communication entre les chambres, et permet également de limiter la contamination entre tests.

Etant donné la miniaturisation des dispositifs mentionnés ci-dessus, les quantités de liquides utilisées présentent des volumes de plus en plus petits. Ces quantités deviennent si faibles que l'utilisation de contenants à usage unique avec des réactifs intégrés est rendue difficile. En effet, pour des raisons de coûts, les matières utilisées pour la réalisation des chambres ou des réservoirs sont produites à partir de matière plastique basique et bon marché, comme les polyoléfines. Ces matériaux ne permettent pas d'obtenir une étanchéité de longue durée et présentent de mauvaises propriétés barrière sans traitement adéquat. Ainsi, une diffusion peut avoir lieu à travers les parois. Il s'ensuit notamment des changements de concentration des réactifs dus à l'évaporation du solvant. Une telle évaporation peut être négligée dans le cas de quantités de plusieurs centaines de µl, mais ne peut pas être négligée dans le cas de volumes de réactifs inférieurs à 50 µl.

Cela signifie qu'il convient de ne placer les réactifs dans le dispositif que juste avant leur utilisation.

Etant donné la miniaturisation des dispositifs mentionnés ci-dessus, la taille des dispositifs eux-mêmes se réduit. On peut estimer que la taille limite pour permettre une manipulation aisée est de l'ordre d'un timbre poste ou d'un morceau de sucre. Un opérateur ne peut assembler ou manipuler des éléments de cette taille étant donné le temps qui lui serait nécessaire pour chaque opération et le risque de pertes de parties du dispositif. Il est plus pratique d'utiliser des ensembles de dispositifs jetables comprenant jusqu'à plusieurs centaines de dispositifs. Un appareil automatique prendra en charge la manipulation des dispositifs jetables à usage unique.

Il est à noter enfin que les dispositifs sont assemblés à partir de plusieurs éléments provenant de différents fabricants. Il convient donc que la structure de ces dispositifs soit adaptée pour un assemblage qui doit être automatisé étant donné les tolérances imposées qui sont de l'ordre de la dizaine de µm.

Il est donc souhaitable de fournir un dispositif de petite taille pouvant aisément être rempli et utilisé par un appareil automatique. Cet appareil doit également être peut coûteux, facile à fabriquer tout en permettant des performances satisfaisantes. Enfin, le document US2006275861 décrit un système constitué de plusieurs compartiments réactionnels individuels, chaque compartiment permettant de traiter indépendamment plusieurs lames. Chaque compartiment peut être le siège d'un traitement propre de la lame de microscope avec des réactifs propres. À cette fin, les réactifs sont mis dans des conteneurs individuels connectés entre eux et coulissant ensemble sur une base. La base comporte un conduit permettant de faire communiquer les conteneurs de réactifs avec le compartiment réactionnel. La présente invention a pour but de résoudre tout ou partie des inconvénients mentionnés ci-dessus.

A cet effet, la présente invention a pour objet un dispositif de préparation, de traitement et/ou d'analyse d'un échantillon biologique selon l'énoncé de la revendication indépendante 1.

Pour réaliser un transfert de fluide entre les chambres du tiroir et les moyens de détection, les premiers moyens de communication fluidique d'une chambre doivent être alignés avec les seconds moyens de communication fluidiques de la surface de contact de la base. Il est ainsi possible de déplacer le tiroir de façon à mettre en communication alternativement différentes chambres du tiroir avec les moyens de détection, en transférant à chaque étape une quantité déterminée de fluide entre la chambre et le module de détection.

Ces dispositions permettent une réalisation simple et robuste de protocoles biologiques complexes. Elles permettent de délivrer de très petites quantités de liquides, même si ceux-ci présentent une forte mouillabilité, sans fuites ni contamination. Le dispositif selon l'invention comporte au moins un moyen d'étanchéité aménagé sur la surface de contact du tiroir.

Avantageusement, les moyens de détection comprennent un canal fluidique et/ou une chambre réactionnelle reliée aux seconds moyens de communication fluidique.

Préférentiellement, les moyens de détection comprennent une puce microfluidique rapportée sur la base et contenant un canal fluidique.

Avantageusement, les premiers moyens de communication fluidiques comprennent au moins une ouverture ménagée dans le tiroir et débouchant sur la surface de contact du tiroir. Les moyens d'étanchéité comprennent au moins un joint d'étanchéité positionné autour de l'ouverture. Plus préférentiellement, les moyens d'étanchéité comprennent deux joints d'étanchéité concentriques, positionnés autour de l'ouverture.

Selon un mode de réalisation avantageux, le dispositif selon l'invention comporte en outre des balais destinés à être positionnés entre la surface de contact du tiroir et la surface de contact de la base.

Préférentiellement, le dispositif comprend des moyens de positionnement mécaniques de la puce microfluidique sur la base. De tels moyens de positionnement peuvent comprendre au moins un pion et une ouverture de forme complémentaire.

Avantageusement, le tiroir comprend deux parties constituées par deux matériaux distincts, l'une de ces parties comprenant un matériau plus rigide que celui de la seconde partie, la seconde partie comportant les premiers moyens de communication fluidiques.

Préférentiellement, la base comprend un logement dont la section permet le guidage en mouvement du tiroir. Les dimensions du tiroir peuvent être en particulier supérieures à celles du logement, de façon à créer une contrainte lorsque le tiroir est placé dans le logement et à maintenir la surface de contact du tiroir en contact avec la surface de contact de la base. La base et le tiroir sont notamment agencés pour permettre un mouvement relatif de translation du tiroir par rapport à la base.

Selon un mode de réalisation, le tiroir comporte un ensemble discret de butées ou de cran de positionnement selon sa direction de déplacement par rapport à la base.

Avantageusement, la puce microfluidique et la base sont formées dans le même pièce, la face supérieure de la puce constituant au moins en partie la surface de contact de la base.

La présente invention concerne également un appareil d'analyse comprenant un dispositif tel que décrit précédemment, et comportant, au niveau d'un poste de traitement, des moyens d'entraînement en mouvement relatif du tiroir par rapport à la base, et des moyens agencés pour transférer une quantité de fluide vers une chambre du tiroir ou à partir d'une chambre du tiroir par l'intermédiaire des moyens de communication fluidique.

Avantageusement, l'appareil comprend, au niveau du poste de traitement, des moyens de connexion électriques comprenant au moins une patte conductrice destinée à établir une connexion électrique avec un contact de la puce microfluidique du dispositif selon l'invention.

Selon des modes de réalisation avantageux, l'appareil peut comprendre :
- un poste de stockage d'un ensemble de dispositifs, et/ou
- un poste de remplissage des chambres du tiroir avec des réactifs, liquides et/ou échantillons.

Préférentiellement, le poste de stockage comprend des moyens de stockage destinés à recevoir un ensemble de dispositifs stockés sur un ensemble de colonnes et de lignes.

Avantageusement, l'appareil comprend, au niveau du poste de remplissage, au moins une pipette ou une aiguille de remplissage des chambres d'un tiroir mobile entre une première position haute et une seconde position basse de remplissage d'une chambre d'un tiroir, ladite aiguille ou pipette étant reliée à un réservoir de réactif ou autre liquide, ou au contenant d'un échantillon à analyser.

Préférentiellement, l'appareil comporte des moyens de convoyage et/ou de manipulation permettant de déplacer les dispositifs entre les postes de l'appareil.

L'invention sera mieux comprise à l'aide de la description détaillée qui est exposée ci-dessous en regard du dessin annexé dans lequel :
La figure 1 est une vue en perspective d'un premier dispositif selon l'invention vu de dessus.
La figure 2 est une vue du dispositif de la figure 1 vu du dessous, sans puce microfluidique.
La figure 3 est une vue du dispositif de la figure 1 vu du dessous, avec une puce microfluidique rapportée sur la base du dispositif.
La figure 4 est une vue en perspective à échelle agrandie du dessous d'un premier tiroir pouvant être utilisé dans le dispositif de la figure 1.
La figure 5 est une vue en perspective à échelle agrandie du dessous d'un second tiroir pouvant être utilisé dans le dispositif de la figure 1.
La figure 6 est une vue de côté du tiroir de la figure 5.
La figure 7 est une vue en perspective d'un second dispositif selon l'invention.
La figure 8 est une vue en perspective du dispositif de la figure 7 avec un film de protection positionné sur le tiroir.
La figure 9 est une vue de détail du dispositif de la figure 8.
La figure 10 est une vue d'un dispositif de la figure 7 positionné dans un appareil d'analyse représenté partiellement.
La figure 11 est une vue d'un dispositif de la figure 7 positionné dans un appareil d'analyse représenté partiellement lors d'une phase d'installation du dispositif dans l'appareil,
Les figures 13 et 14 représentent un poste de stockage de dispositifs et un poste de remplissage de dispositifs d'un appareil d'analyse.
La figure 15 est un organigramme représentant différentes étapes d'utilisation d'un tel dispositif.
La figure 16 est une courbe relative au premier exemple représentant le courant résultant qui est dû à l'oxydation du para-aminophénol, produit de la dégradation du PAPP en présence de la PAL en fonction du temps.
La figure 17 est une courbe relative au premier exemple représentant l'évolution des pentes du courant en fonction de la concentration connue en troponine de sérums de calibration.
La figure 18 est une courbe relative au second exemple représentant l'évolution d'un courant mesuré en fonction du temps.
La figure 19 est une courbe relative au troisième exemple représentant l'évolution d'un courant mesuré en fonction du temps.

Dans la description détaillée qui va suivre des figures définies ci-dessus, les mêmes éléments ou les éléments remplissant des fonctions identiques pourront conserver les mêmes références de manière à simplifier la compréhension de l'invention.

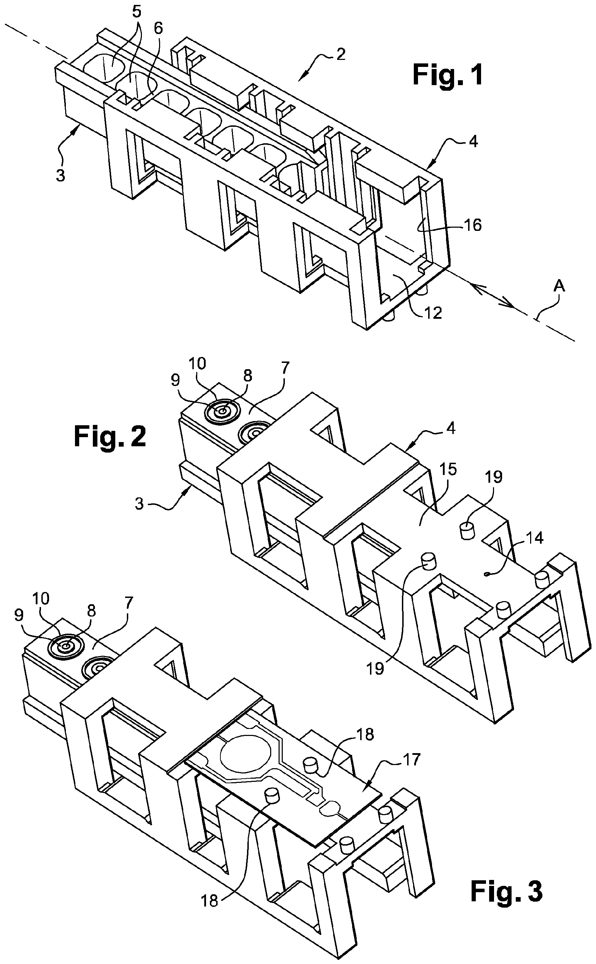

Ainsi que représenté sur les figures 1 à 3, selon un premier mode de réalisation de l'invention, un dispositif de préparation 2 et/ou de traitement d'un échantillon biologique comporte un tiroir 3 comprenant un ensemble de chambres 5 de stockage et/ou de chambres réactionnelles adjacentes, séparées par des parois 6 et destinées à recevoir un fluide. Le dispositif 2 comporte en outre une base 4, par rapport à laquelle le tiroir 3 est mobile.

Les chambres 5 sont alignées selon une direction A et le tiroir 6 est mobile en translation selon cette même direction A par rapport à la base 4. Chaque chambre 5 est ouverte sur une face supérieure du tiroir 3.

Le tiroir 3 comprend une surface de contact inférieure 7 sur laquelle débouchent des premiers moyens de mise en communication fluidique, reliés au volume d'au moins une chambre, comprenant une ouverture de communication 8 dans le fond de chaque chambre 5.

Un premier joint d'étanchéité 9 circulaire est ménagé sur la surface de contact 7 du tiroir 3 autour de l'ouverture de communication 8. Un second joint d'étanchéité 10 concentrique au premier joint 9 est ménagé sur la surface de contact 7 du tiroir 3 à l'extérieur du premier joint 9. Cette disposition permet de conserver une bonne étanchéité même si le premier joint est endommagé.

La surface de contact 7 du tiroir est positionnée en regard d'une surface de contact 12 de la base 4 comprenant au moins une position au niveau de laquelle sont disposés des seconds moyens de communication fluidique complémentaires aux premiers moyens de communication fluidique du tiroir, constitués par un canal de communication s'étendant entre une première ouverture 13 dans la surface de contact 12 de la base 4 et une seconde ouverture 14 située sur une face inférieure 15 de la base 4.

Ainsi, le joint 9 permet d'assurer une étanchéité de chaque chambre en établissant une étanchéité autour de l'ouverture 8 par un appui contre la surface de contact 12 de la base lorsque cette ouverture n'est pas en regard de l'ouverture 13, et permet une communication fluidique sans fuite entre l'ouverture 8 et l'ouverture 13 lorsque ces ouvertures sont en regard.

La base 4 comprend un logement 16 dont la section permet le guidage en translation du tiroir 3. Les dimensions du tiroir 3 sont toutefois légèrement supérieures à celles du logement 16, de façon à créer un contrainte lorsque le tiroir 3 est reçu dans le logement 16 et à maintenir la surface inférieure de contact 7 du tiroir 3 en contact avec la surface de contact 12 du logement et assurer ainsi une bonne étanchéité des joints 9, 10 qui sont compressés contre la surface de contact 7 de la base 4.

Une puce microfluidique 17 contenant un canal fluidique 21 est rapportée sur la base, de façon à ce que la seconde ouverture 14 du canal ménagé dans la base 4 soit disposé en regard d'un orifice d'entrée de la puce microfluidique.

En ce qui concerne la structure et la réalisation de cette puce, celles-ci ne seront pas décrites ici. Différents types de puces peuvent être utilisés. A titre de référence, nous citerons les documents WO 98/23957 et EP1255690 qui décrivent la structure et la réalisation de tels types de puces. Bien entendu d'autres types de puces microfluidiques que celles décrites dans ces documents peuvent être utilisées dans le dispositif 2.

La base 4 et la puce 17 comprennent des moyens de positionnement mécaniques de la puce microfluidique sur la face inférieure de la base constitués par deux ouvertures traversantes 18 ménagées dans la puce et deux pions 19 ménagés sur la face inférieure 15 de la base 4 destinés à être logés dans les deux ouvertures 18 de la puce 17, les pions 19 et les ouvertures 18 présentant des formes complémentaires, en l'occurrence une forme circulaire.

La puce 17 est avantageusement fixée par collage sur la face inférieure 15 de la base 4.

La puce 17 comprend en plus d'une entrée de liquide, une sortie de liquide, pouvant être positionnée sur le dessus ou sur le dessous de la puce selon les modes de réalisation.

Pour réaliser un transfert de fluide entre les chambres 5 et la puce 17, l'ouverture de communication fluidique 8 d'une chambre 5 doit être alignée avec l'ouverture 13 ménagée dans la surface de contact 12 de la base 4. Il est ainsi possible d'utiliser des moyens d'entraînement que nous décrirons par la suite afin de pousser le tiroir de façon à aligner une première ouverture d'une première chambre du tiroir en face de l'ouverture de la base. Lorsque le fluide contenu dans la chambre correspondante est transféré, les moyens d'entraînement poussent le tiroir de façon à aligner l'ouverture d'une deuxième chambre du tiroir en regard de l'ouverture de la base, de transférer le fluide contenu dans cette deuxième chambre, puis de répéter ces opérations jusqu'à la dernière chambre.

La fabrication de la base 4 peut être réalisée par injection plastique, notamment à partir d'un matériau unique. Différents matériaux peuvent être utilisés pour la base 4 qui doivent présenter de préférence les propriétés suivantes :
- une bonne planéité, c'est-à-dire pas de retrait excessif ou de déformation pendant l'éjection de la pièce du moule ;
- une surface lisse ;
- une bonne résistance mécanique pour maintenir fermement le tiroir contre la surface de contact de la base, et éventuellement

La position du point d'injection doit être choisie de façon à permettre une planéité et un remplissage satisfaisant. En outre, la conception de la base doit prendre en compte la déformation sous la contrainte du au montage du tiroir. La base 4 peut être réalisée par exemple en polycarbonate (PC), polystyrène (PS), polyméthacrylate de méthyle (PMMA), polyetherimide (PEI), polyéthylène téréphtalique (PET), polyéthylène naphtalate (PEN), acrylonitrile-butadiène-styrène (ABS), styrène-acrylonitrile (SAN).

Le tiroir 3 est également une pièce en plastique injecté qui peut être réalisée de deux façons différentes, avec une injection simple ou une double injection de deux matières différentes.

L'injection simple permet une réalisation plus facile et moins coûteuse, la bi-injection permet d'améliorer la robustesse de l'ensemble.

Le tiroir 3 fabriqué dans un matériau unique, peut être réalisé à partir de différents polymères, comme notamment les polymères thermoplastiques ou les élastomères thermoplastiques.

Le tiroir 3 tel que représenté sur les figures 1 à 4 est réalisé dans une seule matière, ce qui permet bien entendu de simplifier sa fabrication.

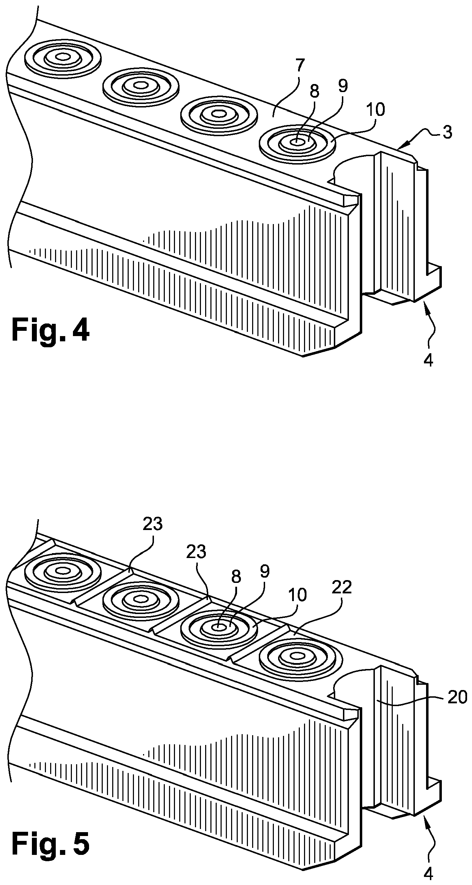

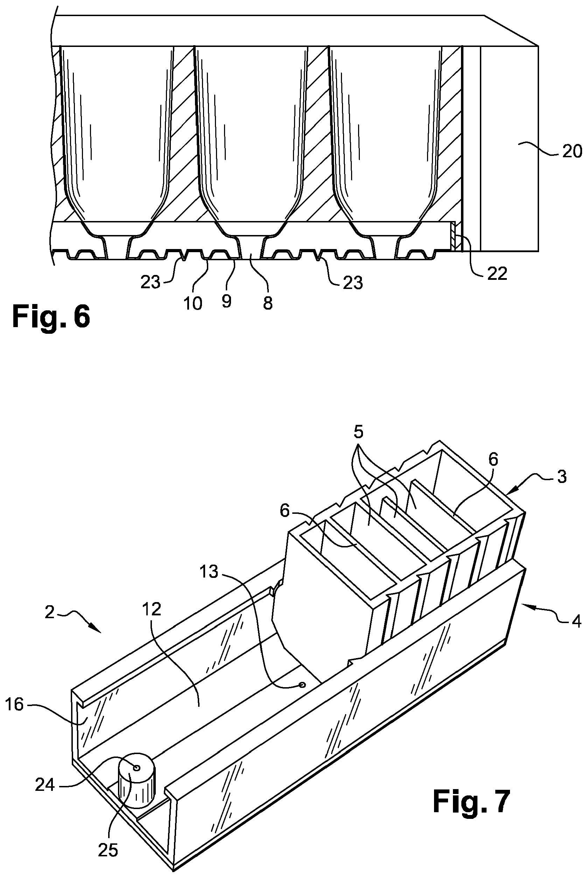

Selon une variante de réalisation du tiroir 3 représenté sur les figures 5 et 6, le tiroir comprend deux parties 20, 22 constituées par deux matériaux distincts, la partie 20 comprenant un matériau plus rigide que celui de la partie 22, cette dernière comportant les moyens de communication fluidiques 8 et les moyens d'étanchéité 9 et 10.

Ce tiroir peut être réalisé par une injection de deux matières, une première matière plus souple étant utilisée pour la partie 22 qui est destinée à réaliser un contact étanche avec la base, notamment un élastomère thermoplastique ou une polyoléfine, et un polymère résistant et peu couteux pour la partie 20 constituant le reste du tiroir, par exemple un polymère thermoplastique pouvant être une polyoléfine. L'adhésion de ces deux polymères doit être satisfaisante pour prévenir les fuites ou le désassemblage des deux matériaux.

D'une façon similaire à ce qui a été décrit pour la première variante de réalisation du tiroir, la zone de contact du tiroir comprend deux joints concentriques 9, 10 autour de l'ouverture 8.

Entre deux ouvertures de deux chambres, la surface de contact peut également comprendre un balai 23.

Les balais 23 sont réalisés sous forme d'une portion en saillie de profil triangulaire, rectangulaire ou semi-circulaire.

Les balais 23 sont de préférence d'une hauteur supérieure à celle des joints 9, 10 et sont destinés à prendre appui contre la surface de contact 12 de la base 4.

L'appui de ces balais 23 permet de racler les résidus situés entre les surfaces de contact 12 de la base et la surface de contact 7 du tiroir à l'extérieur des deux joints d'étanchéité 9, 10 pour confiner ces résidu dans un espace contenu entre deux balais 23 successifs afin d'éviter ainsi une contamination des liquides contenus dans les autres chambres 5 par les ouvertures 8.

Selon un second mode de réalisation représenté sur les figures 7 à 12, le dispositif 2 comprend de façon similaire à ce qui a été décrit dans le premier mode de réalisation un tiroir 3, une base 4 et une puce 17 fixée sous la base 4.

La base 4 comporte sur sa surface de contact 12 avec le tiroir 4 une ouverture permettant la communication avec l'entrée du canal de la puce microfluidique.

La base 4 comprend également un second canal traversant qui communique sur la face inférieure de la base avec la sortie fluidique de la puce, et débouche sur la face supérieure de la base au niveau d'une ouverture de sortie 24, au niveau d'une partie en saillie 25 par rapport à la surface de contact 12 avec le tiroir 3.

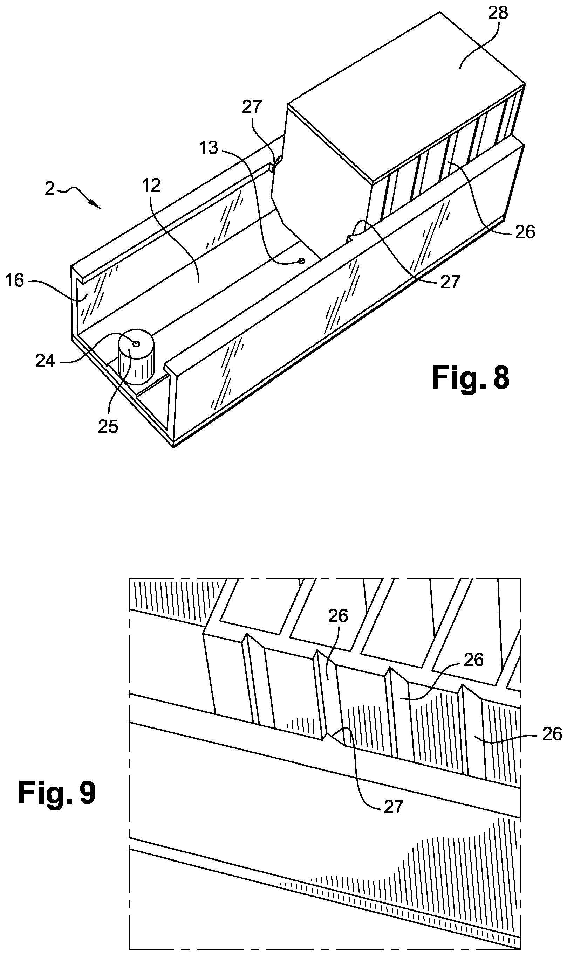

Il est à noter dans ce mode de réalisation que les faces latérales du tiroir comportent un ensemble de crans de positionnement 26 destinés à coopérer avec un taquet 27 positionné sur une paroi du logement 16 de la base 4, visible notamment sur les figures 7 et 9. Avantageusement des taquets sont positionnés sur les deux côtés du logement 16 et des crans 26 sont positionnés sur les deux côtés du tiroir 3. Cette disposition permet de définir de manière fiable les positions dans le déplacement du tiroir par rapport à la base dans lesquelles une ouverture de communication fluidique 8 d'une chambre 5 est en regard de l'ouverture 13 de la base 4 en communication avec l'entrée de la puce 17.

Il est à noter que, comme cela est montré sur la figure 8, les chambres sont ouvertes sur leurs faces supérieures et peuvent être recouvertes d'un film 28 avant utilisation.

Selon une variante non représentée, la puce 17 peut être positionnée directement au contact du tiroir, notamment dans un logement ménagé dans la surface de contact de la base 4. Cette disposition permet d'éviter les contaminations.

Selon une autre variante non représentée, la puce 17 et la base ne peuvent constituer qu'une seule et même pièce, obtenue par moulage par injection. La face supérieure de la puce constitue alors en partie la surface de contact de la base.

Un dispositif selon l'invention est destiné à être utilisé dans un appareil d'analyse. Un tel appareil d'analyse comprend une poste de stockage 30 d'un ensemble de dispositifs 2, un poste 32 de remplissage des chambres 5 du tiroir 3 avec divers réactifs, liquides et échantillons et un poste de traitement 33.

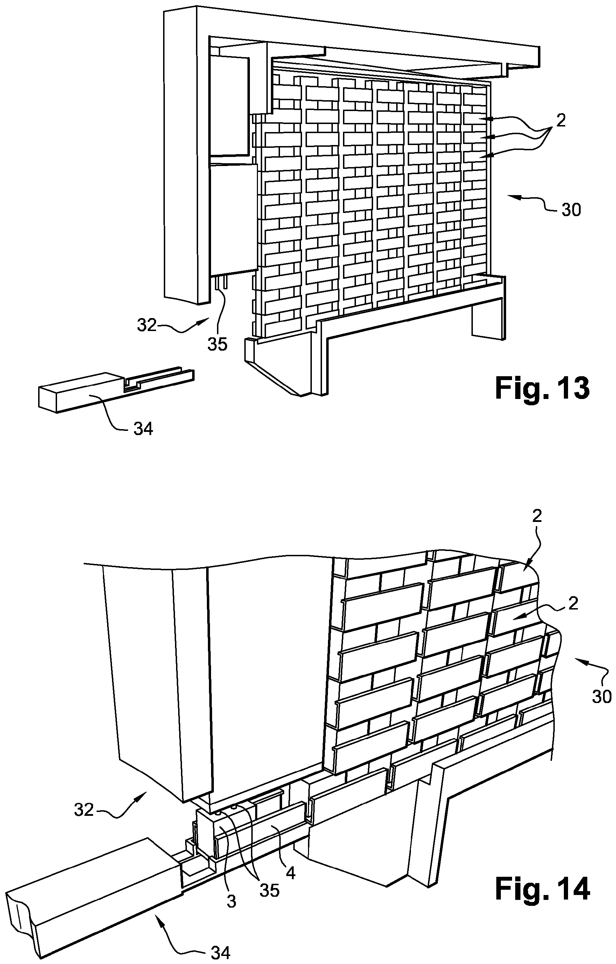

Les figures 13 et 14 représentent un poste de stockage 30 de dispositifs et un poste de remplissage 32 de dispositifs.

Le poste de stockage 30 peut recevoir un ensemble de dispositifs 2 stockés sur un ensemble de colonnes et de lignes. Un dispositif de convoyage 34 permet de prélever un dispositif de cet ensemble et de le positionner au niveau du poste de remplissage 32.

Ce poste de remplissage 32 comprend un ensemble de pipettes ou aiguilles 35 de remplissage des chambres du tiroir. Les aiguilles 35 ou pipettes sont mobiles de façon à pouvoir passer d'une première position haute à une seconde position basse de remplissage dans une chambre 5 d'un tiroir 3.

Chaque aiguille 35 ou pipette est reliée à un réservoir de réactif ou autre liquide, ou au contenant d'un échantillon à analyser.

Une fois les chambres du tiroir remplies, le dispositif est amené dans la partie de traitement par un organe de manipulation 36 qui prélève le dispositif 2 remplis à partir des moyens de convoyage 34.

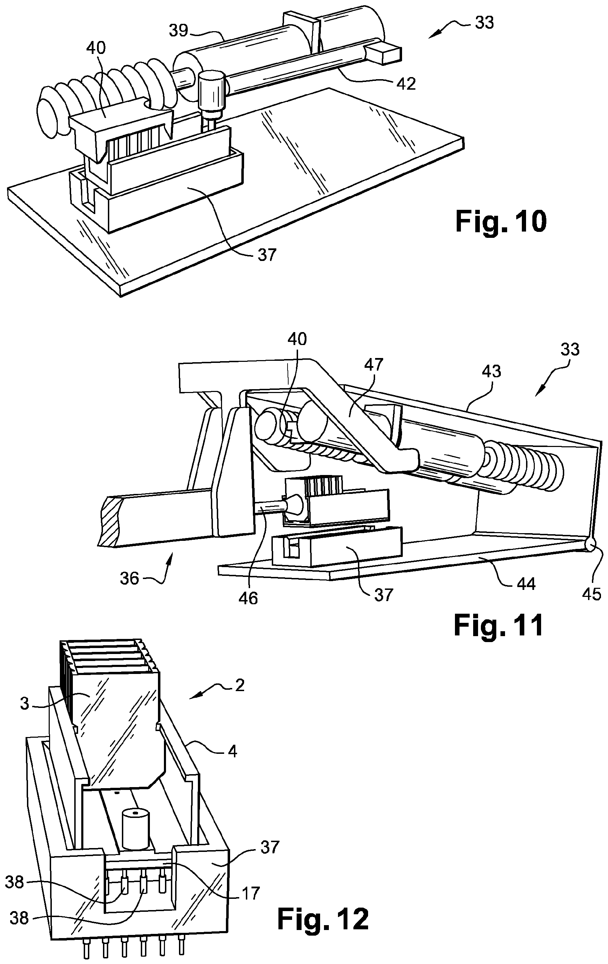

En particulier, ainsi que représenté sur les figures 10 à 12, le poste de traitement 33 de l'appareil d'analyse comprend un emplacement de réception 37 présentant une forme complémentaire à la forme de la base 4 d'un dispositif 2 afin de permettre un positionnement fiable de cette base 4. Comme cela est représenté sur la figure 12, l'emplacement de réception 37 est équipé de moyens de connexion à la puce microfluidique constitués d'un ensemble de pattes conductrices 38 destiné à établir une connexion électrique avec des contacts de la puce 17, ces contacts étant reliés aux électrodes de celles-ci.

Les pattes conductrices 38 sont soumises à l'action d'un ressort pour assurer un maintien du contact électrique.

Le poste de traitement 33 comprend des moyens d'entraînement en mouvement relatif du tiroir par rapport à la base comportant un moteur 39 déplaçant un organe de mise en prise 40 du tiroir 3. De façon avantageuse, l'organe de mise en prise 40 coopère avec la partie supérieure du tiroir dépassant du logement 16 dans la base 4.

Comme cela est représenté sur les figures 10 et 11, l'organe de mise en prise est réalisé sous forme d'un capot 40 destiné à recouvrir le tiroir d'un dispositif 2 pour coopérer avec ses parois et déplacer ce tiroir 3.

Le moteur 40 présente un arbre de sortie comprenant une vis sans fin coopérant avec des encoches ou un filetage du capot 40 afin de déplacer le capot en translation.

Le moteur 39 peut être de type pas-à-pas.

L'organe de mise en prise ou capot 40 permet également d'exercer une pression sur le dispositif de façon à maintenir celui-ci en position contre l'emplacement de réception et contre les moyens de connexion électriques.

Selon une variante, une telle pression pourrait être exercée par d'autres organes sur la base 4 ou le tiroir 3.

Le poste de traitement 33 comprend également une pompe 42 reliée à l'ouverture de sortie 24 de la base communiquant avec la sortie de la puce 17. Cette pompe 42 est donc positionnée en aval du canal de la puce 17 dans le sens de l'aspiration générée par la pompe, les chambres du dispositif étant disposées en amont de ce canal.

Les moyens d'entraînement 39, 40 du tiroir 3 et la pompe 42 sont rapportés sur une première partie 43 de support de l'appareil, mobile par rapport à une seconde partie 44 de support de l'appareil sur laquelle est rapporté l'emplacement de réception 37 du dispositif 2. Ces deux parties de support sont en particulier reliées par une liaison pivot 45 d'axe horizontale.

Un dispositif 2 peut être positionné dans l'emplacement de réception par l'organe de manipulation 36.

L'organe de manipulation 36 comprend des moyens de préhension 46 d'un dispositif 2 constitués par exemple des moyens d'aspiration destinés à maintenir en position le dispositif par effet ventouse sur une face frontale du tiroir 3. L'organe de manipulation 36 comprend également une rampe 47 destinée à coopérer avec la première partie 43 du support.

Lors de l'installation d'un dispositif, la rampe 47 coopère avec la première partie 43 du support pour soulever celle-ci et l'éloigner de la seconde partie 44 du support afin de dégager l'emplacement de réception du dispositif.

L'organe de manipulation 36 dépose le dispositif au niveau de l'emplacement de réception 37 puis est retiré, la première partie 43 du support reprenant sa position initiale, le capot 40 recouvrant le tiroir du dispositif 2 venant d'être installé, la pompe 42 venant au contact de l'ouverture de sortie 24 de la base 3.

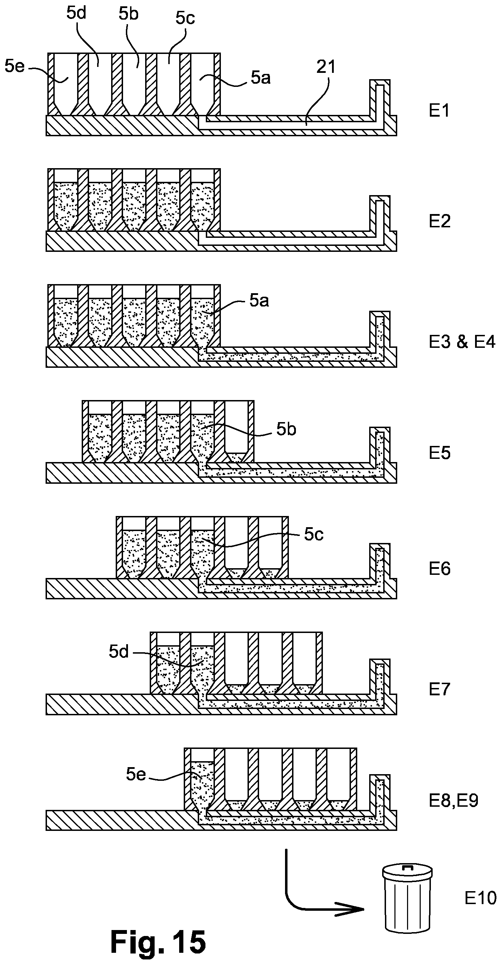

Comme représenté de façon schématique sur la figure 15, le fonctionnement conjoint de l'appareil d'analyse et d'un dispositif selon l'invention peut être illustré par les étapes suivantes pour un dispositif dont le tiroir 3 comprend cinq chambres 5a, 5b, 5c, 5d, 5e.

Dans une première étape E1, un nouveau dispositif 2 est extrait d'un ensemble de dispositifs stocké dans le poste de stockage 30 de l'appareil par des moyens de convoyage 34 et positionné au niveau du poste de remplissage 32.

Dans une seconde étape, E2, les chambre 5a, 5b, 5c, 5d, 5e sont respectivement remplies avec un tampon de prémouillage, l'échantillon, la solution de conjugué, un tampon de lavage et un substrat spécifique de l'analyse à réaliser.

Dans une troisième étape E3, le dispositif ainsi rempli est transféré dans le poste de traitement 33 de l'appareil.

Dans une quatrième étape E4, les moyens d'entraînement déplacent le tiroir 3 jusqu'à ce que la première chambre 5a soit en liaison avec la puce, la pompe aspirant le tampon de prémouillage de la première chambre dans le canal 21.

Dans une cinquième étape E5, les moyens d'entraînement déplacent le tiroir jusqu'à ce que la seconde chambre 5b soit en liaison avec la puce, la pompe aspirant l'échantillon contenu dans la seconde chambre dans le canal 21.

Dans une sixième étape E6, les moyens d'entraînement déplacent le tiroir jusqu'à ce que la troisième chambre 5c soit en liaison avec la puce, la pompe aspirant le conjugué contenu dans la troisième chambre dans le canal 21.

Dans une septième étape E7, les moyens d'entraînement déplacent le tiroir jusqu'à ce que la quatrième chambre 5d soit en liaison avec la puce, la pompe aspirant le liquide de lavage contenu dans la quatrième chambre dans le canal 21.

Dans une huitième étape E8, les moyens d'entraînement déplacent le tiroir jusqu'à ce que la cinquième chambre 5e soit en liaison avec la puce, la pompe aspirant le substrat contenu dans la cinquième chambre dans le canal 21.

Dans une onzième étape E9, l'aspiration de la pompe est arrêtée, et une détection du signal dans la puce est opérée.

Dans une dixième étape E10, l'ensemble des fluides est conduit dans un volume poubelle destiné à recevoir les déchets. En particulier, il est possible pour la pompe de faire refluer l'ensemble du liquide vers le dispositif dans une même chambre, un passage de débordement pouvant être prévu dans celles-ci afin de remplir les chambres adjacentes, comme cela est montré sur la figure 7. Alternativement, Ce volume peut être relargué entre chaque étape ou à la fin de la dernière étape dans un volume de stockage de déchets à l'aide d'une vanne à trois voies.

Il est à noter que selon une variante de l'invention, l'échantillon et la solution de conjugué peuvent être distribués dans la même chambre, en l'occurrence la chambre 5b. Selon cette variante, seules les chambres 5a à 5d sont alors remplies.

Selon une autre variante, étant donné le très faible volume de liquides utilisé, il est possible de se dispenser de liquide de lavage. C'est alors la solution de substrat qui joue le rôle de tampon de lavage. Dans ce cas, la solution de substrat est alors distribuée dans les chambres 5c ou 5d, selon que l'échantillon et la solution de conjugué sont mélangés ou séparés.

### EXEMPLES

Dans les exemples suivants, le dispositif utilisé comporte un tiroir de type bi-matière et une base en polycarbonate (grade PS1 commercialisé par la société SABIC).

La puce est collée sur la base par de la colle UV. Les puces sont du type comprenant une entrée de fluide sur leur face supérieure, et une sortie sur leur face inférieure. Ces puces ont été fournies par la société Dyconex et présentent les caractéristiques suivantes un canal fluidique interne de 180 µm de largeur, 35 µm de profondeur, 24 électrodes de travail étant disposées dans le canal, dont le diamètre est de 50 µm et le pas est de 150 µm.

### Exemple 1. Dosage de la troponine

Un canal d'une puce 17 est fonctionnalisé par adsorption d'anticorps anti-troponine à une concentration de 10 µg/ml, puis séché sous vide après passivation. La puce 17 est ensuite assemblée par collage UV sous la base 4. Le tiroir 3 est finalement inséré dans le logement 16 de la base 4.

Les chambres 5 du tiroir sont remplies par 20µl des réactifs suivants :
- Chambre 5a: tampon de prémouillage,
- Chambre 5b: sérum ou sang du patient dilué au ½ avec une solution comprenant des anticorps anti-troponine marqués par la phosphatase alkaline (PAL),
- Chambre 5c: para-aminophényl phosphate (PAPP).

Le dispositif 2 constitué de la base 3, la puce 17 et le tiroir 4 est ensuite mis en place dans l'appareil et le protocole de dosage est lancé. Les moyens d'entraînement 39, 40 du tiroir 4 permettent de déplacer celui-ci vis-à vis de l'entrée du canal 21 afin de dispenser chacun des réactifs dans le canal en temps voulu. Les différents réactifs sont aspirés depuis les chambres dans le canal à l'aide d'une pompe à seringue. Le volume du corps de la seringue est suffisant pour chacune des étapes du test immunologique. Ce volume peut être relargué entre chaque étape dans un volume de stockage de déchets à l'aide d'une vanne à 3 voies.

Les différentes étapes du test immunologique sont les suivantes :
- étape 1 : activation du canal par un tampon spécifique (30s)
- étape 2 : aspiration du mélange l'échantillon+conjugué (5 min)
- étape 3 : aspiration du substrat qui sert également d'étape de lavage (1min)

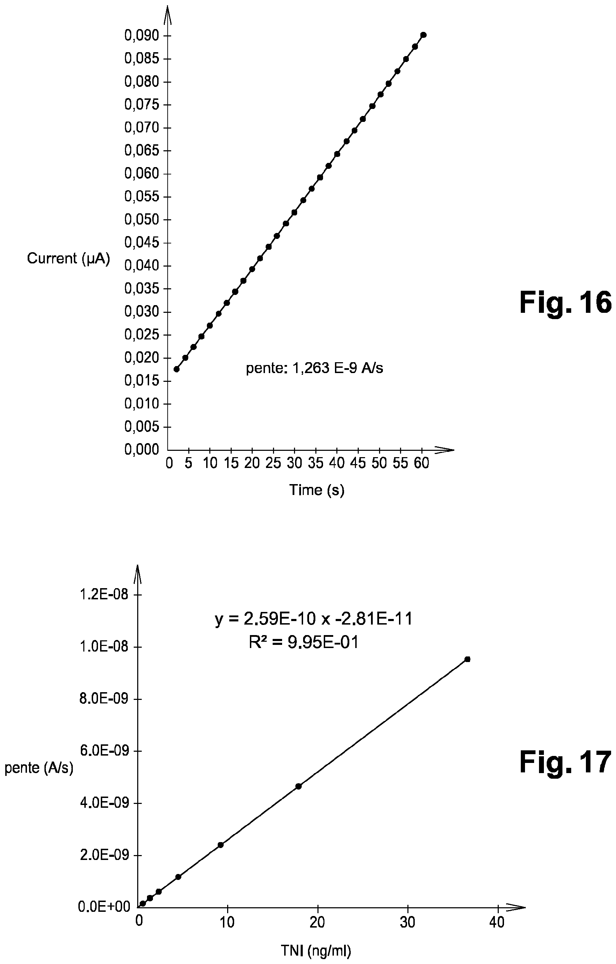

A l'issue de ces trois étapes, la détection électrochimique est lancée. 30 cycles de potentiel en créneaux (-0.2V/0.2V, 1s à chaque potentiel) sont appliqués. Le courant résultant qui est du à l'oxydation du para-aminophénol, produit de la dégradation du PAPP en présence de la PAL, est mesuré. L'évolution de ce courant en fonction du temps est ensuite tracé, et la pente à l'origine de cette cinétique est mesurée comme représenté sur la figure 16. Cette valeur est caractéristique de la concentration en troponine dans l'échantillon du patient. Elle permet d'en déterminer la dose après établissement d'une courbe de calibration décrivant l'évolution des pentes I=f(t) en fonction de la concentration connue en troponine de sérums de calibration, ainsi que représenté sur la figure 17.

### Exemple 2. Dosage simultané de 4 paramètres différents

Dans cet exemple, quatre canaux 21 de quatre puces 17 sont fonctionnalisés par des réactifs différents spécifiques de quatre analytes distincts.

Le premier canal est fonctionnalisé par des anticorps anti-troponine. Le deuxième canal est fonctionnalisé par des anticorps anti-TSH. Le troisième canal est fonctionnalisé par des anticorps anti-Estradiol. Enfin le dernier canal est fonctionnalisé par des antigènes de la toxoplasmose afin de détecter une immunité contre la toxoplasmose. Ces quatre canaux sont mis en place par collage sous quatre bases différentes, puis quatre tiroirs sont installés dans chacune des bases.

Le tableau I ci-dessous décrit les réactifs déposés pour chacune des chambres des quatre tiroirs.

**Tableau I**

| Chambre du tiroir | 1 | 2 | 3 | 4 |
|---|---|---|---|---|
| | Troponine | TSH | Estradiol | Toxoplasmose |
| Chambre 5a | Tampon de prémouillage | Tampon de prémouillage | Tampon de prémouillage | Tampon de prémouillage |
| Chambre 5b | Echantillon + conjugué anticorps PAL | Echantillon | Echantillon + conjugué antigène PAL | Echantillon |
| Chambre 5c | Substrat | Conjugué anticorps PAL | Substrat | Conjugué anticorps PAL |
| Chambre 5d | | Substrat | | Substrat |

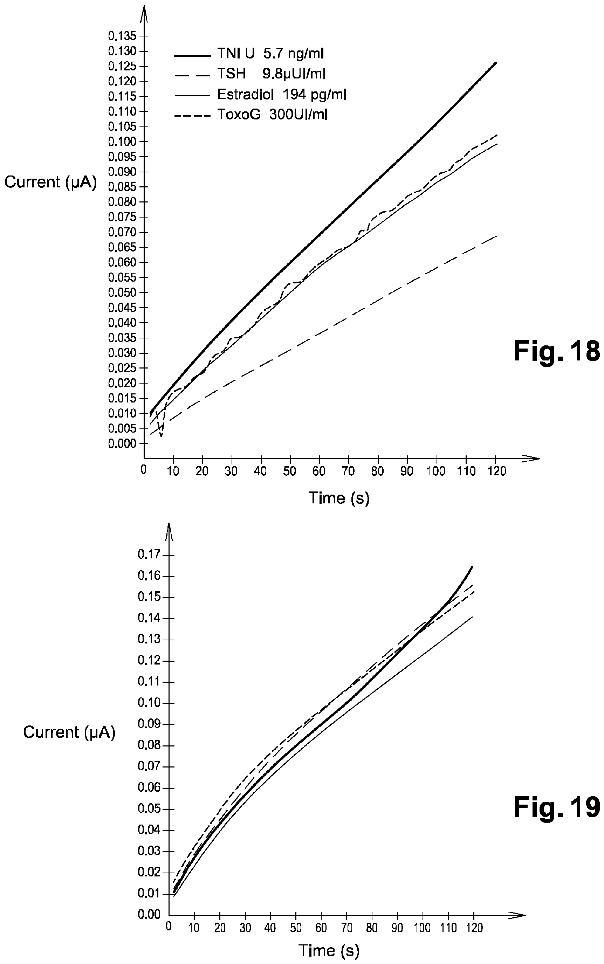

Les quatre dosages sont lancés simultanément sur un appareil d'analyse. Les quatre protocoles de dosage varient par leur nombre d'étapes et la durée de ces différentes étapes, qui est comprise entre 10 et 19 min. A l'issue du passage du dernier réactif -le substrat enzymatique PAPP- la détection électrochimique est lancée dans chacun des canaux comme décrit dans l'exemple 1. L'évolution du courant en fonction du temps est mesurée et reportée sur la figure 18.

Après établissement de courbes de calibration, il est possible à partir de la mesure des pentes à l'origine de déterminer la dose de chacun des quatre analytes dans les quatre échantillons testés qui peuvent provenir ou non du même patient.

### Exemple 3. Reproductibilité de 4 dosages simultanés sur des échantillons de sang total.

Quatre canaux sont fonctionnalisés par des anticorps anti-troponine. Ces quatre canaux sont collés sous quatre bases distinctes, elles-mêmes équipées de quatre tiroirs. Chacun de ces tiroirs est rempli par les réactifs spécifiques de la troponine comme décrit dans l'exemple 1. Un même échantillon de sang total est testé quatre fois sur chacun des quatre canaux. Les dosages sont lancés simultanément sur les quatre stations d'un appareil d'analyse, suivis des détections électrochimiques. Les pentes des courbes d'intensité en fonction du temps obtenues pour chacun des canaux sont mesurées. La reproductibilité (CV) des quatre dosages peut ainsi être mesurée ainsi que représenté sur la figure 19 et en référence au tableau II ci-dessous.

| Station | Pente (A/s) |
|---|---|
| 1 | 1.47E-09 |
| 2 | 1.62E-09 |
| 3 | 1.43E-09 |
| 4 | 1.57E-09 |
| Moyenne | 1.52E-09 |
| CV (%) | 5.76% |

### Exemple 4. Limite de détection analytique du paramètre Troponine

Les 32 canaux de 32 puces sont fonctionnalisés par des anticorps anti-troponine. Ces différents canaux 21 sont testés comme décrits précédemment sur le paramètre Troponine, en présence d'échantillons de calibration de concentration connue en troponine. 20 tests sont réalisés en présence de sérum de concentration en troponine nulle ou non détectable. 12 tests sont réalisés en présence de sérum de concentration faible en troponine (0.2 ng/ml). La limite de détection est évaluée à deux fois l'écart-type sur l'ensemble des tests négatifs, soit une valeur de 0.023 ng/ml.

## Revendications

1. Dispositif (2) de préparation, de traitement et/ou d'analyse d'un échantillon biologique comprenant :
- une base (4) et
- un tiroir (3), mobile en translation par rapport à la base (4), comprenant un ensemble de chambres (5) de stockage et/ou réactionnelles destinées à recevoir un fluide , les chambres (5) étant séparées par des parois (6) de façon à constituer un ensemble de chambres adjacentes,
le tiroir (3) comprenant en outre une surface de contact (7) sur laquelle débouchent des premiers moyens de mise en communication fluidique reliés au volume interne des chambres (5), ces premiers moyens de communication fluidiques comprennent au moins une ouverture (8) ménagée dans le tiroir (3) et débouchant sur la surface de contact (7) du tiroir (3), la surface de contact (7) du tiroir étant positionnée en regard d'une surface de contact (12) de la base (4) comprenant au moins une position au niveau de laquelle sont disposés des seconds moyens de communication fluidique (13) reliés à des moyens de détection (17),
le dispositif étant **caractérisé en ce qu'**au moins un moyen d'étanchéité est aménagé sur la surface de contact (7) dudit tiroir (3), comprenant un joint d'étanchéité (9) positionné autour de ladite au moins une ouverture (8), de sorte que :
- une étanchéité de chaque chambre (5) est assurée par appui contre la surface de contact (12) de la base (4) lorsque ladite au moins ouverture (8) n'est pas en regard des seconds moyens de communication fluidique (13), et
- une communication fluidique sans fuite entre ladite au moins une ouverture (8) et les seconds moyens de communication fluidique (13) est réalisée lorsque ces derniers sont en regard.

2. Dispositif (2) selon la revendication 1, dans lequel les moyens de détection (17) comprennent un canal fluidique (21) et/ou une chambre réactionnelle reliée aux seconds moyens de communication fluidique (13).

3. Dispositif (2) selon la revendication 2, dans lequel les moyens de détection comprennent une puce microfluidique (17) contenant un canal fluidique (21) rapportée sur la base (4).

4. Dispositif (2) selon la revendication précédente, dans lequel les moyens d'étanchéité comprennent deux joints d'étanchéité concentriques (9, 10), positionnés autour de l'ouverture (8).

5. Dispositif (2) selon l'une des revendications précédentes, comprenant en outre des balais (23) destinés à être positionnés entre la surface de contact (7) du tiroir (3) et la surface de contact (12) de la base (4).

6. Dispositif (2) selon l'une des revendications 3 à 5, comprenant des moyens de positionnement mécaniques (18, 19) de la puce microfluidique (17) sur la base (3).

7. Dispositif (2) selon la revendication 6 comprenant au moins un pion (19) et une ouverture (19) de forme complémentaire.

8. Dispositif (2) selon l'une des revendications précédentes, dans lequel le tiroir comprend deux parties (20, 22) constituées par deux matériaux distincts, l'une de ces parties (20) comprenant un matériau plus rigide que celui de la seconde partie (22), la seconde partie comportant les premiers moyens de communication fluidiques (8, 9, 10).

9. Dispositif (2) selon l'une des revendications précédentes, dans lequel la base (4) comprend un logement (16) dont la section permet le guidage en mouvement du tiroir (3).

10. Dispositif (2) selon l'une des revendications précédentes, dans lequel les dimensions du tiroir (3) sont supérieures à celles du logement (16), de façon à créer un contrainte lors que le tiroir (3) est reçu dans le logement (16) et de maintenir la surface de contact (7) du tiroir (3) en contact avec la surface de contact (12) de la base (4).

11. Dispositif (2) selon l'une des revendications précédentes, dans lequel le tiroir (3) comporte un ensemble discrets de butées ou de cran (26) de positionnement selon sa direction de déplacement (A) par rapport à la base (4).

12. Dispositif (2) selon l'une des revendications précédentes, dans lequel la base (4) et le tiroir (3) sont agencé pour permettre un mouvement relatif de translation du tiroir (3) par rapport à la base (4).

13. Dispositif selon l'une des revendications 3 à 12, dans lequel la puce microfluidique (17) et la base (4) sont formées dans la même pièce, la face supérieure de la puce (17) constituant au moins en partie la surface de contact (12) de la base (4).

14. Appareil d'analyse comprenant un dispositif (2) selon l'une des revendications précédentes, et comportant, au niveau d'un poste de traitement (33), des moyens d'entraînement (39, 40) en mouvement relatif du tiroir (3) par rapport à la base (4), et des moyens (42) agencés pour transférer une quantité de fluide vers une chambre (5) du tiroir (3) ou à partir d'une chambre (5) du tiroir (3) par l'intermédiaire des moyens de communication fluidique (8).

15. Appareil selon la revendication 14, comprenant, au niveau du poste de traitement (33), des moyens de connexion électriques (38) comprenant au moins une patte conductrice (38) destinée à établir une connexion électrique avec un contact de la puce microfluidique (17) d'un dispositif (2) selon la revendication 3.

16. Appareil selon la revendication 14 ou 15, dans lequel le poste de stockage (30) comprend des moyens de stockage destinés à recevoir un ensemble de dispositifs (2) stockés sur un ensemble de colonnes et de lignes.

17. Appareil selon l'une des revendications 14 à 16 comprenant un poste (32) de remplissage des chambres (5) du tiroir (3) avec des réactifs, liquides et/ou échantillons.

18. Appareil selon la revendication 17, comprenant, au niveau du poste (32) de remplissage, au moins une pipette ou une aiguille (35) de remplissage des chambres d'un tiroir (3) mobile entre une première position haute et une seconde position basse de remplissage d'une chambre (5) d'un tiroir (3), ladite aiguille (35) ou pipette étant reliée à un réservoir de réactif ou autre liquide, ou au contenant d'un échantillon à analyser.

19. Appareil selon la revendication 14 à 18 comprenant un des moyens de convoyage et/ou de manipulation (34, 36) permettant de déplacer les dispositifs entre les postes (32, 33, 30) de l'appareil.

## Patentansprüche

1. Vorrichtung (2) zur Vorbereitung, Behandlung und/oder Analyse einer biologischen Probe, umfassend:
- eine Basis (4) und
- ein Schubfach (3), das in Bezug zur Basis (4) bei der Translation beweglich ist, umfassend eine Gesamtheit von Speicher- und/oder Reaktionskammern (5), die dazu bestimmt sind, ein Fluid aufzunehmen, wobei die Kammern (5) durch Wände (6) getrennt sind, um eine Gesamtheit von aneinandergrenzenden Kammern darzustellen,
wobei das Schubfach (3) ferner eine Kontaktfläche (7) umfasst, auf der erste Mittel zur Fluidverbindung, die mit dem Innenvolumen der Kammern (5) verbunden sind, münden, wobei diese ersten Mittel zur Fluidverbindung mindestens eine Öffnung (8) umfassen, die in dem Schubfach (3) ausgenommen ist und auf der Kontaktfläche (7) des Schubfachs (3) mündet, wobei die Kontaktfläche (7) des Schubfachs gegenüber einer Kontaktfläche (12) der Basis (4) positioniert ist, umfassend mindestens eine Position, auf deren Ebene zweite Mittel zur Fluidverbindung (13), die mit Erfassungsmitteln (17) verbunden sind, angeordnet sind,
wobei die Vorrichtung **dadurch gekennzeichnet ist, dass** mindestens ein Abdichtungsmittel auf der Kontaktfläche (7) des Schubfachs (3) angeordnet ist, umfassend eine Dichtung (9), die um die mindestens eine Öffnung (8) positioniert ist, so dass:
- eine Abdichtung jeder Kammer (5) durch Anlage an der Kontaktfläche (12) der Basis (4) gewährleistet ist, wenn die mindestens eine Öffnung (8) nicht gegenüber den zweiten Mitteln zur Fluidverbindung (13) angeordnet ist, und
- eine Fluidverbindung ohne Leckage zwischen der mindestens einen Öffnung (8) und den zweiten Mitteln zur Fluidverbindung (13) hergestellt wird, wenn diese letztgenannten einander gegenüberliegen.

2. Vorrichtung (2) nach Anspruch 1, bei der die Erfassungsmittel (17) einen Fluidkanal (21) und/öder eine Reaktionskammer, die mit den zweiten Mitteln zur Fluidverbindung (13) verbunden ist, umfassen.

3. Vorrichtung (2) nach Anspruch 2, bei der die Erfassungsmittel einen Mikrofluidchip (17) umfassen, der einen auf die Basis (4) aufgesetzten Fluidkanal (21) enthält.

4. Vorrichtung (2) nach dem vorhergehenden Anspruch, bei der die Abdichtungsmittel zwei konzentrische Dichtungen (9, 10) umfassen, die um die Öffnung (8) angeordnet sind.

5. Vorrichtung (2) nach einem der vorhergehenden Ansprüche, ferner umfassend Bürsten (23), die dazu bestimmt sind, zwischen der Kontaktfläche (7) des Schubfachs (3) und der Kontaktfläche (12) der Basis (4) positioniert zu werden.

6. Vorrichtung (2) nach einem der Ansprüche 3 bis 5, umfassend mechanische Mittel (18, 19) zur Positionierung des Mikrofluidchips (17) auf der Basis (3).

7. Vorrichtung (2) nach Anspruch 6, umfassend mindestens einen Stift (19) und eine Öffnung (19) von komplementärer Form.

8. Vorrichtung (2) nach einem der vorhergehenden Ansprüche, bei der das Schubfach zwei Teile (20, 22) umfasst, die aus zwei unterschiedlichen Materialien gebildet sind, wobei einer dieser Teile (20) ein steiferes Material als jenes des zweiten Teils (22) umfasst, wobei der zweite Teil die ersten Mittel zur Fluidverbindung (8, 9, 10) umfasst.

9. Vorrichtung (2) nach einem der vorhergehenden Ansprüche, bei der die Basis (4) eine Aufnahme (16) umfasst, deren Querschnitt die Führung des Schubfachs (3) bei dessen Bewegung ermöglicht.

10. Vorrichtung (2) nach einem der vorhergehenden Ansprüche, bei der die Dimensionen des Schubfachs (3) größer als jene der Aufnahme (16) sind, um eine Spannung zu erzeugen, wenn das Schubfach (3) in der Aufnahme (16) aufgenommen wird, und die Kontaktfläche (7) des Schubfachs (3) mit der Kontaktfläche (12) der Basis (4) in Kontakt zu halten.

11. Vorrichtung (2) nach einem der vorhergehenden Ansprüche, bei der das Schubfach (3) eine diskrete Gesamtheit von Anschlägen oder Positionierrasten (26) in seiner Verschiebungsrichtung (A) in Bezug zur Basis (4) umfasst.

12. Vorrichtung (2) nach einem der vorhergehenden Ansprüche, bei der die Basis (4) und das Schubfach (3) dazu vorgesehen sind, eine relative Translationsbewegung des Schubfachs (3) in Bezug zur Basis (4) zu ermöglichen.

13. Vorrichtung nach einem der Ansprüche 3 bis 12, bei der der Mikrofluidchip (17) und die Basis (4) aus demselben Stück gebildet sind, wobei die Oberseite des Chips (17) zumindest teilweise die Kontaktfläche (12) der Basis (4) darstellt.

14. Analysegerät, umfassend eine Vorrichtung (2) nach einem der vorhergehenden Ansprüche, und auf der Ebene einer Behandlungsstation (33) umfassend Mittel (39, 40) für den Antrieb des Schubfachs (3) bei relativer Bewegung in Bezug zur Basis (4), und Mittel (42), die dazu vorgesehen sind, eine Fluidmenge zu einer Kammer (5) des Schubfachs (3) oder von einer Kammer (5) des Schubfachs (3) mit Hilfe der Mittel zur Fluidverbindung (8) weiterzuleiten.

15. Gerät nach Anspruch 14, umfassend auf der Ebene der Behandlungsstation (33) elektrische Anschlussmittel (38), umfassend mindestens eine leitende Klaue (38), die dazu bestimmt ist, eine elektrische Verbindung mit einem Kontakt des Mikrofluidchips (17) einer Vorrichtung (2) nach Anspruch 3 herzustellen.

16. Gerät nach Anspruch 14 oder 15, bei dem die Speicherstation (30) Speichermittel umfasst, die dazu bestimmt sind, eine Gesamtheit von Vorrichtungen (2) aufzunehmen, die auf einer Gesamtheit von Spalten und Zeilen gespeichert sind.

17. Gerät nach einem der Ansprüche 14 bis 16, umfassend eine Station (32) zum Füllen der Kammern (5) des Schubfachs (3) mit Reagentien, Flüssigkeiten und/oder Proben.

18. Gerät nach Anspruch 17, umfassend auf der Ebene der Füllstation (32) mindestens eine Pipette oder Nadel (35) zum Füllen der Kammern eines Schubfachs (3), das zwischen einer ersten oberen Position und einer zweiten unteren Position zum Füllen einer Kammer (5) eines Schubfachs (3) beweglich ist, wobei die Nadel (35) oder Pipette mit einem Behälter eines Reagens oder einer anderen Flüssigkeit oder mit dem Behälter einer zu analysierenden Probe verbunden ist.

19. Gerät nach Anspruch 14 bis 18, umfassend eines der Förder- und/oder Manipulationsmittel (34, 36), die es ermöglichen, die Vorrichtungen zwischen den Stationen (32, 33, 30) des Geräts zu verschieben.

## Claims

1. A device (2) for the preparation, treatment and/or analysis of a biological sample comprising:
- a base (4) and
- a drawer (3), movable in translation relative to the base (4), comprising a set of storage and/or reaction chambers (5) intended to receive a fluid, said chambers (5) being separated by walls (6) so as to constitute a set of adjacent chambers,
said drawer (3) further comprising a contact surface (7) onto which first means for establishing fluid communication open, connected to the internal volume of chambers (5), the first fluid communication means comprise at least one opening (8) made in drawer (3) and opening onto the contact surface (7) of the drawer (3), the contact surface (7) of the drawer being positioned opposite a contact surface (12) of the base (4) comprising at least one position at which second fluid communication means (13) are arranged, connected to detection means (17),
the device being **characterised in that** at least one sealing means is provided on the contact surface (7) of the drawer (3), comprising a seal (9) positioned around the opening (8), so that:
- a hermeticity of each chamber (5) is established by bearing against the contact surface (12) of the base (4) when said at least one opening (8) does not face second fluid communication means (13), and
- a fluid communication without leakage between said at least one opening (8) and second fluid communication means (13) is established when the latest face.

2. The device (2) as claimed in claim 1, in which the detection means (17) comprise a fluidic channel (21) and/or a reaction chamber connected to the second fluid communication means (13).

3. The device (2) as claimed in claim 2, in which the detection means comprise a microfluidic chip (17) containing a fluidic channel (21) mounted on the base (4).

4. The device (2) as claimed in the preceding claim, in which the sealing means comprise two concentric seals (9, 10), positioned around the opening (8).

5. The device (2) as claimed in one of the preceding claims, further comprising wipers (23) intended to be positioned between the contact surface (7) of the drawer (3) and the contact surface (12) of the base (4).

6. The device (2) as claimed in one of claims 3 to 5, comprising mechanical means (18, 19) for positioning the microfluidic chip (17) on the base (3).

7. The device (2) as claimed in claim 9 comprising at least one pin (19) and an opening (18) of complementary shape.

8. The device (2) as claimed in one of the preceding claims, in which the drawer comprises two parts (20, 22) constituted of two different materials, one of these parts (20) comprising a material that is more rigid than that of the second part (22), the second part having the first fluid communication means (8, 9, 10).

9. The device (2) as claimed in one of the preceding claims, in which the base (4) comprises a housing (16) whose section is able to guide the movement of the drawer (3).

10. The device (2) as claimed in one of the preceding claims, in which the dimensions of the drawer (3) are greater than those of the housing (16), so as to create a stress when the drawer (3) is received in the housing (16) and to keep the contact surface (7) of the drawer (3) in contact with the contact surface (12) of the base (4).

11. The device (2) as claimed in one of the preceding claims, in which the drawer (3) comprises a separate set of positioning stops or notches (26) depending on its direction of movement (A) relative to the base (4).

12. The device (2) as claimed in one of the preceding claims, in which the base (4) and the drawer (3) are arranged to permit a relative movement of translation of the drawer (3) relative to the base (4).

13. The device as claimed in one of claims 3 to 12, in which the microfluidic chip (17) and the base (4) are formed as a single piece, the upper face of the chip (17) at least partly constituting the contact surface (12) of the base (4).

14. An apparatus for analysis comprising a device (2) as claimed in one of the preceding claims, and having, at a treatment station (33), driving means (39, 40) for relative movement of the drawer (3) relative to the base (4), and means (42) arranged for transferring an amount of fluid to a chamber (5) of the drawer (3) or from a chamber (5) of the drawer (3) via the fluid communication means (8).

15. The apparatus as claimed in claim 14, comprising, at the treatment station (33), electrical connection means (38) comprising at least one conducting tab (38) intended for establishing an electrical connection with a contact of the microfluidic chip (17) of a device (2) as claimed in claim 3.

16. The apparatus as claimed in claim 14 or 15, in which the storage station (30) comprises storage means intended to receive a set of devices (2) stored on a set of columns and rows.

17. The apparatus as claimed in one of claims 14 to 16 comprising a station (32) of chambers (5) for filling the drawer (3) with reagents, liquids and/or samples.

18. The apparatus as claimed in claim 17, comprising, at the filling station (32), at least one pipet or a needle (35) for filling the chambers of a drawer (3) that is movable between a first high position and a second low position for filling a chamber (5) of a drawer (3), said needle (35) or pipet being connected to a reservoir of reagent or some other liquid, or to the container of a sample to be analyzed.

19. The apparatus as claimed in claim 14 to 18 comprising one of the conveying and/or manipulating means (34, 36) enabling the devices to be moved between the stations (32, 33, 30) of the apparatus.
